(19) Europäisches Patentamt
European Patent Office
Office européen des brevets

(11) EP 4 799 989 A1

(12) **EUROPEAN PATENT APPLICATION**
published in accordance with Art. 153(4) EPC

(43) Date of publication:
**02.09.2026 Bulletin 2026/36**

(21) Application number: **24882275.1**

(22) Date of filing: **17.10.2024**

(51) International Patent Classification (IPC):
***C04B 7/44*** *(2006.01)* ***B01D 53/62*** *(2006.01)*
***F27D 17/22*** *(2025.01)*

(52) Cooperative Patent Classification (CPC):
**B01D 53/62; C04B 7/38; C04B 7/44; F27D 17/22**

(86) International application number:
**PCT/JP2024/036921**

(87) International publication number:
**WO 2025/089162 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.10.2023 JP 2023181608**

(71) Applicant: **Sumitomo Osaka Cement Co., Ltd.**
**Tokyo, 105-8641 (JP)**

(72) Inventors:
- **OKADA, Yutaka**
  **Tokyo 105-8641 (JP)**
- **NAKAYAMA, Shin**
  **Tokyo 105-8641 (JP)**

(74) Representative: **Müller-Boré & Partner Patentanwälte PartG mbB**
**Friedenheimer Brücke 21**
**80639 München (DE)**

# (54) METHOD FOR PRODUCING CEMENT CLINKER AND CEMENT FIRING EQUIPMENT

(57) According to the present invention, there are provided a method for producing a cement clinker and a cement firing facility, in which by using predetermined adjustment means in a specific cyclone collector configuring a suspension pre-heater of the cement firing facility, a collection efficiency of the cyclone collector is adjusted to adjust the amount of carbon dioxide in combustion exhaust gas produced in the cement firing facility without modifying the cement firing facility on a large scale.

FIG. 1

K-TYPE POWDER MATERIAL SUPPLY (FROM K-TYPE POWDER MATERIAL SUPPLY DEVICE)
K4a
CARBON DIOXIDE RECOVERY FACILITY, CEMENT RAW MATERIAL DRYING, AND THE LIKE
C4a
CARBON DIOXIDE RECOVERY FACILITY, CEMENT RAW MATERIAL DRYING, AND THE LIKE
K4
K3a
K4b
C4
C-TYPE POWDER MATERIAL SUPPLY (FROM C-TYPE POWDER MATERIAL SUPPLY DEVICE)
K-TYPE AIR DUCT
C4b
K2a
K3
C3a
C-TYPE AIR DUCT
C3
K3b
C3b
C2a
K1a
K2
C2
K2b
C2b
C1a
K1
C0a
C1
CALCINATION FURNACE
FUEL
K0a
K1b
C1b
FUEL
EMISSION TO ATMOSPHERE
ROTARY KILN
CEMENT CLINKER COOLER
AIR
AIR
AIR

EP 4 799 989 A1

## Description

TECHNICAL FIELD

The present disclosure relates to a method for producing a cement clinker and a cement firing facility.

BACKGROUND

Recently, the interest in global warming has increased, and a reduction in emissions of carbon dioxide to the atmosphere has been required. In various facilities such as a power plant, an incinerator, a cement plant, an iron mill, or a plant facility, a method for separating and recovering carbon dioxide in exhaust gas containing carbon dioxide that is produced by an operation to reduce emissions of the exhaust gas to the atmosphere is considered. In particular, a reduction in emissions of carbon dioxide in the cement plant is regarded as an urgent issue.

Examples of a configuration of a general cement plant include a configuration disclosed in Patent Literature 1, that is, a cement production facility including: a pre-heater configured to pre-heat a cement raw material by heat exchange with high-temperature gas; a cement calcination furnace configured to calcinate the cement raw material to obtain a cement clinker; a cooling device configured to guide a part of air that is heated by heat exchange with the cement clinker as air for burner combustion of the cement calcination furnace; an absorption tower where an absorbent for absorbing carbon dioxide is stored and a regeneration tower configured to heat the absorbent to volatilize carbon dioxide; and an exhaust gas introduction pipe configured to guide exhaust gas from the pre-heater into the absorption tower after using the exhaust gas as a heat source through the regeneration tower.

As the suspension pre-heater, for example, there is known a heating device having a structure disclosed in Patent Literature 2 where a plurality of independent hot gases are caused to flow through a plurality of air ducts configured with a plurality of collectors, respectively, and a powdery material is charged from an air duct leading to a collector positioned at an uppermost portion among the plurality of collectors, is caused to sequentially pass through the collector, and is exhausted from below a collector positioned at a lowermost stage.

In addition, Patent Literature 3 discloses a cement clinker production system including a cyclone pre-heater for pre-heating a cement clinker raw material, a rotary kiln configured to calcinate the pre-heated cement clinker raw material to obtain a cement clinker, a calcination furnace provided upstream of the rotary kiln to promote decarbonation of the cement clinker raw material, a pre-heated raw material supply path for supplying the cement clinker raw material from the pre-heater to the calcination furnace, a clinker cooler configured to cool the cement clinker, a kiln exhaust gas exhaust path configured to exhaust exhaust gas that is produced in the rotary kiln and exhausted after passing through the pre-heater, a calcination furnace exhaust gas exhaust path configured to exhaust carbon dioxide gas-containing exhaust gas produced in the calcination furnace, a supply device for combustion supporting gas where an oxygen concentration is increased, first recovery means for recovering a slaked lime-containing raw material from the carbon dioxide gas-containing exhaust gas, and a calcination furnace exhaust gas supply path provided downstream of the first recovery means in the calcination furnace exhaust gas supply path and where a part of the carbon dioxide gas-containing exhaust gas is joined to the combustion supporting gas.

Citation List

Patent Literature

Patent Literature No. 1: Japanese Laid-open Patent Publication No. 1997-110485 (H9-110485)
Patent Literature No. 2: Japanese Laid-open Patent Publication No. 1980-22322 (S55-22322)
Patent Literature No. 3: Japanese Laid-open Patent Publication No. 2022-148255

SUMMARY OF INVENTION

Technical Problem

The cement firing facility disclosed in Patent Literature 1 is a facility where exhaust gas that is exhausted from the pre-heater configured to pre-heat a cement raw material by heat exchange with high-temperature gas is guided into the absorption tower after using the exhaust gas as a heat source through the regeneration tower such that carbon dioxide can be inexpensively removed from exhaust gas produced in the cement production facility by using thermal energy of the exhaust gas. However, since the concentration of carbon dioxide in the exhaust gas is low, the scale of the facilities for

recovering carbon dioxide, that is, the absorption tower and the regeneration tower increases. Regarding this point, there is room for improvement.

The cement clinker production system disclosed in Patent Literature 3 can be a system that is effective for new installation. However, for example, when the cement clinker production system is applied to an existing cement firing facility, it is necessary to modify the cement firing facility on a large scale, for example, to modify a pipe such as an exhaust path and a raw material supply path for exhausting kiln exhaust gas and calcination furnace exhaust gas or to modify the device such as the calcination furnace.

The present invention has been made under these circumstances, and an object thereof is to provide a method for producing a cement clinker and a cement firing facility, in which the amount of carbon dioxide in combustion exhaust gas produced in a cement firing facility is adjusted without modifying the cement firing facility on a large scale. Solution to Problem

In order to achieve the above object, the present invention provides the following method for producing a cement clinker.

1. A method for producing a cement clinker using a cement firing facility including

a drying and grinding device configured to dry and grind a cement raw material to obtain a powder material,
a suspension pre-heater configured to pre-heat and calcinate the powder material,
a rotary kiln configured to fire the pre-heated and calcinated powder material to obtain a cement clinker, and
a cement clinker cooler configured to cool the cement clinker, in which
the suspension pre-heater includes
a calcination furnace configured to calcinate the powder material,
two different air ducts of a C-type air duct and a K-type air duct,
the C-type air duct including three or more stages of cyclone collectors configured to collect the powder material and a gas flow path configured to sequentially connect the three or more stages of cyclone collectors and through which calcination furnace combustion exhaust gas exhausted from the calcination furnace passes,
the K-type air duct including three or more stages of cyclone collectors configured to collect the powder material and a gas flow path configured to sequentially connect the three or more stages of cyclone collectors and through which kiln combustion exhaust gas exhausted from the rotary kiln passes,
a raw material feed conduit K-I configured to connect a cyclone collector of the K-type air duct to a gas flow path that supplies the calcination furnace combustion exhaust gas to a cyclone collector of the C-type air duct positioned at the same stage as the cyclone collector of the K-type air duct,
a raw material feed conduit C-I configured to connect a cyclone collector of the C-type air duct to a gas flow path that supplies the kiln combustion exhaust gas to a cyclone collector of the K-type air duct positioned one stage below the cyclone collector of the C-type air duct,
a raw material feed conduit K-II configured to connect a cyclone collector positioned at a lowermost stage of the K-type air duct to the calcination furnace,
a raw material feed conduit C-II configured to connect a cyclone collector positioned at a lowermost stage of the C-type air duct to the rotary kiln, and
a powder material supply device configured to supply the powder material to a cyclone collector positioned at an uppermost stage in at least one of the two air ducts,
at least one of cyclone collectors positioned at a lowermost stage in the two air ducts and at least one of cyclone collectors positioned one stage above the lowermost stage include adjustment means for adjusting a collection efficiency of the powder material, and
a collection efficiency in the cyclone collectors is adjusted by the adjustment means.

Further, the present invention provides the following method for producing a cement clinker as a preferable embodiment.

2. The method for producing a cement clinker according to 1., in which in the cyclone collectors positioned at the lowermost stage, the collection efficiency is reduced by the adjustment means.
3. The method for producing a cement clinker according to 1. or 2., in which in the cyclone collectors positioned one stage above the lowermost stage, the collection efficiency is increased by the adjustment means.
4. The method for producing a cement clinker according to any one of 1. to 3., in which a temperature of the kiln combustion exhaust gas after passing through a cyclone collector positioned one stage above the lowermost stage in the K-type air duct is 700°C or lower.
5. The method for producing a cement clinker according to any one of 1. to 4., in which carbon dioxide is recovered from the calcination furnace combustion exhaust gas using a carbon dioxide recovery facility.

6. The method for producing a cement clinker according to any one of 1. to 5., in which at least the kiln combustion exhaust gas is used for drying the cement raw material.
7. The method for producing a cement clinker according to any one of 1. to 6., in which

the drying and grinding device includes a drying unit or a drying and grinding unit, and
at least the kiln combustion exhaust gas is supplied to the drying unit or the drying and grinding unit.

In addition, the present invention provides the following cement firing facility.

8. A cement firing facility including:

a drying and grinding device configured to dry and grind a cement raw material to obtain a powder material;
a suspension pre-heater configured to pre-heat and calcinate the powder material;
a rotary kiln configured to fire the pre-heated and calcinated powder material to obtain a cement clinker; and
a cement clinker cooler configured to cool the cement clinker, in which
the suspension pre-heater includes
a calcination furnace configured to calcinate the powder material,
two different air ducts of a C-type air duct and a K-type air duct,
the C-type air duct including three or more stages of cyclone collectors configured to collect the powder material and a gas flow path configured to sequentially connect the three or more stages of cyclone collectors and through which calcination furnace combustion exhaust gas exhausted from the calcination furnace passes,
the K-type air duct including three or more stages of cyclone collectors configured to collect the powder material and a gas flow path configured to sequentially connect the three or more stages of cyclone collectors and through which kiln combustion exhaust gas exhausted from the rotary kiln passes,
a raw material feed conduit K-I configured to connect a cyclone collector of the K-type air duct to a gas flow path that supplies the calcination furnace combustion exhaust gas to a cyclone collector of the C-type air duct positioned at the same stage as the cyclone collector of the K-type air duct,
a raw material feed conduit C-I configured to connect a cyclone collector of the C-type air duct to a gas flow path that supplies the kiln combustion exhaust gas to a cyclone collector of the K-type air duct positioned one stage below the cyclone collector of the C-type air duct,
a raw material feed conduit K-II configured to connect a cyclone collector positioned at a lowermost stage of the K-type air duct to the calcination furnace,
a raw material feed conduit C-II configured to connect a cyclone collector positioned at a lowermost stage of the C-type air duct to the rotary kiln, and
a powder material supply device configured to supply the powder material to a cyclone collector positioned at an uppermost stage in at least one of the two air ducts, and
at least one of cyclone collectors positioned at a lowermost stage in the two air ducts and at least one of cyclone collectors positioned one stage above the lowermost stage include adjustment means for adjusting a collection efficiency of the powder material.

9. The cement firing facility according to 8., further including a carbon dioxide recovery facility configured to recover carbon dioxide from the calcination furnace combustion exhaust gas.
10. The cement firing facility according to 8. or 9., in which

the drying and grinding device includes a drying unit or a drying and grinding unit, and
the cement firing facility further includes an exhaust gas supply pipe configured to supply at least the kiln combustion exhaust gas to the drying unit or the drying and grinding unit.

Advantageous Effects of Invention

According to the present invention, it is possible to provide a method for producing a cement clinker and a cement firing facility, in which the amount of carbon dioxide in combustion exhaust gas produced in a cement firing facility is adjusted without modifying the cement firing facility on a large scale.

BRIEF DESCRIPTION OF DRAWINGS

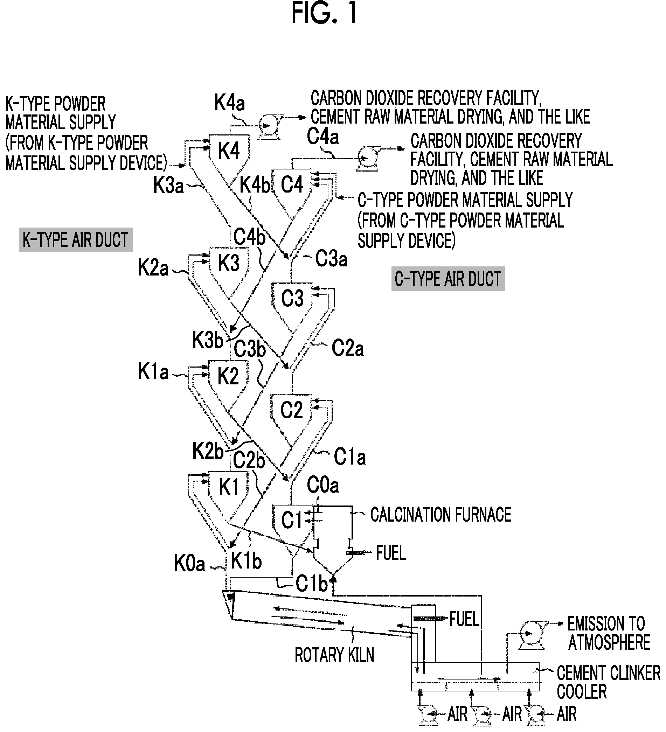

[FIG. 1] A schematic diagram illustrating one preferable aspect of a cement firing facility used in a production method according to the present embodiment.

DESCRIPTION OF EMBODIMENTS

Hereinafter, an embodiment of the present invention (hereinafter, also referred to as "present embodiment") will be described. The present invention is not limited to the following embodiment, and any changes can be made within a range where the effects of the present invention do not deteriorate. The notation of a numerical range of "AA to BB" in the present specification means "AA or more and BB or less". In addition, in the present specification, numerical values regarding "or more", "or less", and "to" that relate to the description of a numerical range are any combination of numerical values. For example, when "CC to DD" and "EE to FF" in a certain numerical range are described, numerical ranges such as "CC to FF" and "EE to DD" are also included.

[Method for Producing Cement Clinker]

According to an embodiment of the present invention, there is provided a method for producing a cement clinker using a cement firing facility including

a drying and grinding device configured to dry and grind a cement raw material to obtain a powder material,
a suspension pre-heater configured to pre-heat and calcinate the powder material;
a rotary kiln configured to fire the pre-heated and calcinated powder material to obtain a cement clinker, and
a cement clinker cooler configured to cool the cement clinker, in which
the suspension pre-heater includes
a calcination furnace configured to calcinate the powder material,
two different air ducts of a C-type air duct and a K-type air duct,
the C-type air duct including three or more stages of cyclone collectors configured to collect the powder material and a gas flow path configured to sequentially connect the three or more stages of cyclone collectors and through which calcination furnace combustion exhaust gas exhausted from the calcination furnace passes,
the K-type air duct including three or more stages of cyclone collectors configured to collect the powder material and a gas flow path configured to sequentially connect the three or more stages of cyclone collectors and through which kiln combustion exhaust gas exhausted from the rotary kiln passes,
a raw material feed conduit K-I configured to connect a cyclone collector of the K-type air duct to a gas flow path that supplies the calcination furnace combustion exhaust gas to a cyclone collector of the C-type air duct positioned at the same stage as the cyclone collector of the K-type air duct,
a raw material feed conduit C-I configured to connect a cyclone collector of the C-type air duct to a gas flow path that supplies the kiln combustion exhaust gas to a cyclone collector of the K-type air duct positioned one stage below the cyclone collector of the C-type air duct,
a raw material feed conduit K-II configured to connect a cyclone collector positioned at a lowermost stage of the K-type air duct to the calcination furnace,
a raw material feed conduit C-II configured to connect a cyclone collector positioned at a lowermost stage of the C-type air duct to the rotary kiln, and
a powder material supply device configured to supply the powder material to a cyclone collector positioned at an uppermost stage in at least one of the two air ducts,
at least one of cyclone collectors positioned at a lowermost stage in the two air ducts and at least one of cyclone collectors positioned one stage above the lowermost stage include adjustment means for adjusting a collection efficiency of the powder material, and
a collection efficiency in the cyclone collectors is adjusted by the adjustment means.

As described above, in the cement firing facility described in Patent Literature 1, exhaust gas having a low carbon dioxide concentration that is exhausted from the pre-heater is introduced into the facilities including the regeneration tower and the absorption tower that recover carbon dioxide, which causes an increase in the size of the facilities for recovering carbon dioxide.

Further, in order to implement the cement clinker production system described in Patent Literature 3, it is necessary to modify the cement firing facility on a large scale.

Under these circumstances, the present inventors focused on a collection efficiency in the plurality of cyclone collectors in the suspension pre-heater. In order to more efficiently produce a cement clinker, the collection efficiency is generally set to be high, and the collection efficiency is not set for adjusting a carbon dioxide concentration in exhaust gas. Therefore, Patent Literatures Nos. 1 to 3 do not describe a configuration of adjusting the collection efficiency in the cyclone collectors and a configuration capable of adjusting the amount (concentration) of carbon dioxide in exhaust gas through the adjustment. Further, depending on a method for adjusting the collection efficiency, a configuration capable of improving the recovery amount of carbon dioxide in exhaust gas is not described at all.

The present inventors dared to adjust the collection efficiency to adjust the amount (concentration) of carbon dioxide in exhaust gas, and found that it is effective to adjust a collection efficiency of a specific cyclone collector among a plurality of cyclone collectors in a suspension pre-heater, that is, any of a cyclone collector positioned at the lowermost stage and a cyclone collector positioned one stage above the lowermost stage.

As a result, the amount of carbon dioxide in combustion exhaust gas produced in a cement firing facility can be adjusted without modifying the cement firing facility on a large scale.

Hereinafter, a method for producing a cement clinker according to the present embodiment will be described using FIG. 1. FIG. 1 is a schematic diagram illustrating one preferable aspect of a cement firing facility used in the method for producing a cement clinker according to the present embodiment.

In FIG. 1, the cement firing facility includes: a suspension pre-heater configured to pre-heat and calcinate a powder material; a rotary kiln configured to fire the powder material that is pre-heated and calcinated by the suspension pre-heater to obtain a cement clinker; and a clinker cooler configured to cool the cement clinker.

(Suspension Pre-heater)

As illustrated in FIG. 1, the suspension pre-heater used in the production method according to the present embodiment includes two air ducts (a C-type flow path and a K-type flow path) through which different exhaust gases independently pass, each of the two air ducts including: three or more stages of cyclone collectors (four stages of cyclone collectors C1 to C4 and K1 to K4) configured to collect the powder material; and gas flow paths (gas flow paths C0a to C4a and K0a to K4a) configured to sequentially connect the three or more stages of cyclone collectors. Here, calcination furnace combustion exhaust gas that is exhausted by combusting fuel in a calcination furnace passes through the C-type flow path, and kiln combustion exhaust gas that is exhausted by combusting fuel in a rotary kiln passes through the K-type flow path.

In addition, in FIG. 1, the calcination furnace combustion exhaust gas and the kiln combustion exhaust gas that are different independently pass through the C-type air duct and the K-type air duct, the calcination furnace combustion exhaust gas sequentially passes through the cyclone collector C1 positioned at the lowermost stage to the cyclone collector C4 positioned at the uppermost stage while passing through the gas flow paths (C0a to C4a), and the kiln combustion exhaust gas sequentially passes through the cyclone collector K1 positioned at the lowermost stage to the cyclone collector K4 positioned at the uppermost stage while passing through the gas flow paths (K1a to K4a).

The suspension pre-heater includes the two air ducts through which the different exhaust gases independently pass as described above, raw material feed conduits, and a powder material supply device, and further includes adjustment means for adjusting a collection efficiency of a predetermined powder material and a calcination furnace. By providing the calcination furnace, the powder material can be more efficiently pre-heated and calcinated.

The suspension pre-heater only needs to include three or more stages of cyclone collectors and, for example, as illustrated in FIG. 1, may include four stages of cyclone collectors or may include four or more stages of cyclone collectors. From the viewpoint more efficiently recovering heat from exhaust gas, it is preferable that four or more stages of cyclone collectors are provided.

In FIG. 1, as the raw material feed conduits, the K-type air duct includes K-type raw material feed conduits including raw material feed conduits K-I (K2b to K4b in FIG. 1) configured to connect a cyclone collector of the K-type air duct to a gas flow path that supplies the calcination furnace combustion exhaust gas to a cyclone collector of the C-type air duct positioned at the same stage as the cyclone collector of the K-type air duct, and a raw material feed conduit K-II (K1b in FIG. 1) configured to connect a cyclone collector positioned at a lowermost stage of the K-type air duct to the calcination furnace; and the C-type air duct includes C-type raw material feed conduits including raw material feed conduits C-I (C2b to C4b in FIG. 1) configured to connect a cyclone collector of the C-type air duct to a gas flow path that supplies the kiln combustion exhaust gas to a cyclone collector of the K-type air duct positioned one stage below the cyclone collector of the C-type air duct, and a raw material feed conduit C-II (C1b in FIG. 1) configured to connect a cyclone collector positioned at a lowermost stage of the C-type air duct to the rotary kiln.

Here, assuming that a cyclone collector in the K-type air duct is K3, a cyclone collector of the C-type air duct positioned at the same stage as the cyclone collector K3 in the K-type air duct corresponds to C3, and a raw material feed conduit connected to the gas flow path C2a that supplies the calcination furnace combustion exhaust gas to the cyclone collector C3 corresponds to K3b. In addition, for example, assuming that a cyclone collector in the C-type air duct is C3, a cyclone collector of the K-type air duct positioned one stage below the cyclone collector C3 in the C-type air duct corresponds to K2, and a raw material feed conduit connected to the gas flow path K1a that supplies the kiln combustion exhaust gas to the cyclone collector K2 corresponds to C3b.

The cement raw material having passed through the drying and grinding device is supplied from the powder material supply device described below to the suspension pre-heater, more specifically, from the powder material supply device to the cyclone collector positioned at the uppermost stage of the suspension pre-heater. In FIG. 1, the powder material is supplied from the K-type powder material supply device to the cyclone collector K4 positioned at the uppermost

stage of the K-type air duct, and is supplied from the C-type powder material supply device to the cyclone collector C4 positioned at the uppermost stage of the C-type air duct.

The powder material that is supplied from the K-type powder material supply device is pre-heated and calcinated while sequentially passing through the cyclone collector K4, the raw material feed conduit K4b, the gas flow path C3a, the cyclone collector C4, the raw material feed conduit C4b, the gas flow path K2a, the cyclone collector K3, the raw material feed conduit K3b, the gas flow path C2a, the cyclone collector C3, the raw material feed conduit C3b, the gas flow path K1a, the cyclone collector K2, the raw material feed conduit K2b, the gas flow path C1a, the cyclone collector C2, the raw material feed conduit C2b, the gas flow path K0a, the cyclone collector K1, the raw material feed conduit K1b, the calcination furnace, the gas flow path C0a, the cyclone collector C1, and the raw material feed conduit C1b, and is supplied to the rotary kiln. In addition, the powder material that is supplied from the C-type powder material supply device is supplied to the cyclone collector C4, passes through the raw material feed conduit C1b from the raw material feed conduit C4b together with the powder material supplied from the K-type powder material supply device, is pre-heated and calcinated, and is supplied to the rotary kiln.

This way, the powder material that is supplied to the suspension pre-heater alternately moves through the cyclone collectors in the C-type air duct and the K-type air duct that are different air ducts from the upper stage to the lower stage, and is supplied to the rotary kiln after passing through all the cyclone collectors. In addition, the powder material that moves from the cyclone collector positioned at the uppermost stage to the cyclone collector positioned at the lowermost stage comes into contact with the combustion exhaust gas (the calcination furnace combustion exhaust gas and the kiln combustion exhaust gas) that move through the air duct in the opposite direction thereof, that is, in a direction from the cyclone collector positioned at the lowermost stage to the cyclone collector positioned at the uppermost stage. As a result, the powder material can be efficiently pre-heated and calcinated.

The powder material supply device is a device that supplies the powder material obtained in the drying and grinding device to the cyclone collector positioned at the uppermost stage in at least one of the two air ducts including the C-type air duct and the K-type air duct. In FIG. 1, the powder material supply device is provided for all of the two air ducts including the C-type air duct and the K-type air duct. That is, as the powder material supply device, the C-type powder material supply device that supplies the powder material to the cyclone collector positioned at the uppermost stage in the C-type air duct and the K-type powder material supply device that supplies the powder material to the cyclone collector positioned at the uppermost stage in the K-type air duct are provided.

More specifically, the powder material from the powder material supply device is supplied to the gas flow path connected to the cyclone collector as the supply destination. When the powder material in the K-type is described as an example, the K-type powder material is supplied to the gas flow path K3a connected to the cyclone collector K4 as the supply destination of the kiln combustion exhaust gas from the cyclone collector K3. In addition, when the powder material in the C-type is described as an example, the C-type powder material is supplied to the gas flow path C3a connected to the cyclone collector C4 as the supply destination of the calcination furnace combustion exhaust gas from the cyclone collector C3.

The powder material supply device may be provided to supply the powder material to the cyclone collector positioned at the uppermost stage in at least one of the two air ducts including the C-type air duct and the K-type air duct. In FIG. 1, since the powder material can be caused to pass through all the cyclone collectors, the powder material supply device that supplies the powder material to the cyclone collector K4 positioned at the uppermost stage at least in the K-type air duct only needs to be provided. In addition, as illustrated in FIG. 1, the two powder material supply devices such as the C-type powder material supply device and the K-type powder material supply device may be provided to supply the powder material are supplied to the cyclone collectors C4 and K4 positioned at the uppermost stage in the C-type air duct and the K-type air duct that are both air ducts of the two air ducts. In the production method according to the present embodiment, it is preferable that the powder material supply device is provided in all the air ducts of the two air ducts from the viewpoint of more stably supplying the powder material and more efficiently pre-heating and calcinating the powder material.

In the suspension pre-heater, in at least one of the cyclone collectors positioned at the lowermost stage in the two air ducts including the C-type air duct and the K-type air duct and at least one of the cyclone collectors positioned one stage above the lowermost stage, a collection efficiency is adjusted using the adjustment means for adjusting the collection efficiency of the powder material in the above-described cyclone collectors. By efficiently utilizing the adjustment means in the cyclone collectors for adjusting the collection efficiency, the amount of carbon dioxide in the combustion exhaust gas can be adjusted.

Here, the cyclone collector positioned at the lowermost stage in the C-type air duct corresponds to the cyclone collector C1 in FIG. 1, and the cyclone collector positioned at the lowermost stage in the C-type air duct corresponds to K1. The cyclone collector positioned one stage above the lowermost stage in the C-type air duct corresponds to the cyclone collector C2 in FIG. 1, and the cyclone collector positioned one stage above the lowermost stage in the K-type air duct corresponds to the cyclone collector K2 in FIG. 1.

The cyclone collector positioned at the lowermost stage for which the collection efficiency is adjusted using the adjustment means only needs to be at least one of the cyclone collectors disposed to the lowermost stage in the C-type air

duct and the K-type air duct. In consideration of ease of adjusting the amount of carbon dioxide in the combustion exhaust gas, it is preferable that the collection efficiency is adjusted using the adjustment means of the cyclone collector positioned at the lowermost stage in the C-type air duct, in FIG. 1, the cyclone collector C1, and it is more preferable that the collection efficiency is adjusted using the adjustment means of a plurality of cyclone collectors, preferably, all the cyclone collectors (in FIG. 1, corresponding to both the cyclone collectors C1 and K1) positioned at the lowermost stage.

The cyclone collector positioned one stage above the lowermost stage for which the collection efficiency is adjusted using the adjustment means only needs to be at least one of the cyclone collectors disposed to the stage one stage above the lowermost stage. In consideration of ease of adjusting the amount of carbon dioxide in the combustion exhaust gas, it is preferable that the collection efficiency is adjusted using the adjustment means of the cyclone collector in the K-type air duct, in FIG. 1, the cyclone collector K2, and it is more preferable that the collection efficiency is adjusted using the adjustment means of the cyclone collectors (in FIG. 1, corresponding to both the cyclone collectors C2 and K2) positioned one stage above the lowermost stage in each of the C-type air duct and the K-type air duct.

Hereinabove, the case where the collection efficiency is adjusted using the adjustment means in either one cyclone collector positioned at the lowermost stage or one cyclone collector positioned one stage above the lowermost stage in the C-type air duct and the K-type air duct has been described. However, as described above, it is preferable that the collection efficiency is adjusted using the adjustment means of two cyclone collectors positioned at the lowermost stage and positioned one stage above the lowermost stage in the C-type air duct and the K-type air duct, that is, both cyclone collectors.

It is more preferable that each of the collection efficiencies of four cyclone collectors positioned at the lowermost stage and positioned one stage above the lowermost stage in the C-type air duct and the K-type air duct is adjusted.

In addition, the collection efficiencies of the four cyclone collectors only need to be determined such that the amount of carbon dioxide in the combustion exhaust gas is a predetermined amount. As a result of adjusting the collection efficiency, even when the collection efficiencies before and after the adjustment are the same numerical value or the collection efficiency is as it is without being adjusted, there is no problem. That is, in order to obtain the predetermined amount of carbon dioxide in the combustion exhaust gas, the collection efficiencies of one to four cyclone collectors among the four cyclone collectors can be adjusted.

Regarding a method capable of adjusting the amount of carbon dioxide in the combustion exhaust gas when the collection efficiency is adjusted using the adjustment means in both cyclone collectors (the cyclone collectors C1 and K1) among the cyclone collectors positioned at the lowermost stage in the two air ducts including the C-type air duct and the K-type air duct and in both cyclone collectors (the cyclone collectors C2 and K2) among the cyclone collectors positioned one stage above the lowermost stage, a preferable aspect thereof will be described in more detail as an example.

(Powder Material in Cyclone Collector C1: Decarbonation Reaction)

Calcium carbonate in the powder material is heated at a high temperature of preferably 800°C to 900°C in the calcination furnace such that the following decarbonation reaction progresses, calcium oxide is obtained.

$$CaCO_3 \rightarrow CaO + CO_2$$

Together with the calcination furnace combustion exhaust gas, the powder material that is decarbonated in the calcination furnace passes through the gas flow path C0a and is supplied to the cyclone collector C1 that is the cyclone collector positioned at the lowermost stage in the C-type air duct. Here, the decarbonation rate of the powder material is about 90%, and the decarbonation rate is a rate represented by the following formula.

$$\text{Decarbonation Rate (\%)} = (Ca_0 - Ca_1)/Ca_0 \times 100$$

$Ca_0$: the amount (ton/h) of calcium carbonate in the powder material to be charged into the suspension pre-heater.

$Ca_1$: the amount (ton/h) of calcium carbonate in the powder material in the cyclone collector C1.

Here, the powder material to be charged into the suspension pre-heater corresponds to the powder material to be supplied from the C-type powder material supply device and the K-type powder material supply device in FIG. 1.

(Powder Material in Cyclone Collector K2: Carbonation Reaction)

The powder material including calcium oxide that is decarbonated in the cyclone collector C1 as the cyclone collector positioned at the lowermost stage in the air duct is supplied in an atmosphere of combustion exhaust gas having a lower temperature than the cyclone collector C1, preferably, in an atmosphere of combustion exhaust gas in the K-type air

duct. As a result, carbon dioxide in the combustion exhaust gas and calcium oxide in the powder material react with each other such that the following carbonation reaction progresses, and calcium carbonate is obtained.

$$CaO + CO_2 \rightarrow CaCO_3$$

(Collection Efficiency in Cyclone Collector)

The powder material that is supplied to the cyclone collector together with the combustion exhaust gas including the calcination furnace combustion exhaust gas and the kiln combustion exhaust gas is collected by the inertial force, and is exhausted from the raw material feed conduit (hereinafter, also referred to as "collected raw material"). On the other hand, the powder material that is not collected (hereinafter, also referred to as "scattered raw material") is exhausted through the gas flow path together with the combustion exhaust gas, and is supplied to the cyclone collector positioned on the upper stage. Here, the collection efficiency in the cyclone collector is an efficiency calculated by the following numerical expression.

Collection efficiency (%) = Collected Raw Material/(Collected Raw Material + Scattered Raw Material) $\times$ 100

The collection efficiency can be adjusted by the adjustment means for adjusting the collection efficiency in the cyclone collector. By the adjustment of the collection efficiency, the amounts of the collected raw material and the scattered raw material can be increased. As described below, by adjusting the collection efficiency, the decarbonation and the carbonation described above can be adjusted. Therefore, the amount of carbon dioxide in the combustion exhaust gas can be adjusted.

(Powder Material in Cyclone Collector C1: Behavior of Powder Material)

The powder material including calcium oxide that passes through the gas flow path C0a from the calcination furnace and is supplied to the cyclone collector C1 positioned at the lowermost stage in the air duct, is separated into the collected raw material and the scattered raw material. The collected raw material passes through the raw material feed conduit C1b, is supplied to the rotary kiln, and is completely decarbonated and fired in the rotary kiln to obtain a clinker.

On the other hand, the scattered raw material from the cyclone collector C1 that is the cyclone collector positioned at the lowermost stage in the air duct passes through the gas flow path C1a together with the calcination furnace combustion exhaust gas, is joined with the collected raw material of the cyclone collector K2 in the raw material feed conduit K2b, and is supplied to the cyclone collector C2 positioned one stage above the lowermost stage in the C-type air duct.

In consideration of adjusting the amount of carbon dioxide in the combustion exhaust gas and further adjusting the amount of carbon dioxide in the calcination furnace combustion exhaust gas of the C-type air duct to be increased, it is preferable that the collection efficiency of the cyclone collector C1 is adjusted to be reduced such that a large amount of the scattered raw material including calcium oxide is transported to the cyclone collector C2.

The collection efficiency of the cyclone collector (preferably the cyclone collector C1) positioned at the lowermost stage is preferably 50% or more and more preferably 55% or more, and the upper limit thereof is preferably 80% or less, more preferably 70% or less, and still more preferably 65% or less. By adjusting the collection efficiency of the cyclone collector C1 that is the cyclone collector positioned at the lowermost stage to be 50% or more, the collected raw material can be efficiently supplied to the rotary kiln, and the cement clinker can be efficiently produced. On the other hand, by adjusting the collection efficiency to be 80% or less, the scattered raw material including calcium oxide can be increased, and carbon dioxide in the kiln combustion exhaust gas can be efficiently used for carbonation.

(Powder Material in Cyclone Collector C2: Behavior of Powder Material)

The powder material that is supplied to the cyclone collector C2 positioned one stage above the lowermost stage in the air duct, is separated into the collected raw material and the scattered raw material. The collected raw material passes through the raw material feed conduit C2b, and is supplied to the cyclone collector K1 positioned at the lowermost stage in the K-type air duct together with the kiln combustion exhaust gas passing through the gas flow path K0a.

On the other hand, the scattered raw material from the cyclone collector C2 that is the cyclone collector positioned one stage above the lowermost stage in the air duct passes through the gas flow path C2a together with the calcination furnace combustion exhaust gas, is joined with the collected raw material of the cyclone collector K3 in the raw material feed conduit K3b, and is supplied to the cyclone collector C3 positioned two stages above the lowermost stage in the C-

type air duct.

In consideration of adjusting the amount of carbon dioxide in the combustion exhaust gas and further adjusting the amount of carbon dioxide in the calcination furnace combustion exhaust gas of the C-type air duct to be increased, it is preferable that the collection efficiency of the cyclone collector C2 is adjusted to be increased. Due to the adjustment, a larger amount of the collected raw material including calcium oxide can be supplied to the cyclone collector K1 positioned at the lowermost stage in the K-type air duct. Therefore, carbon dioxide in the kiln combustion exhaust gas can be more efficiently used for the carbonation of calcium oxide. In addition, the scattered raw material to the cyclone collector C3 positioned one stage above the stage can be reduced, and the carbonation in the cyclone collector C3 can also be suppressed.

The collection efficiency of the cyclone collector (preferably the cyclone collector C2) positioned one stage above the lowermost stage is preferably 85% or more and more preferably 90% or more. By adjusting the collection efficiency of the cyclone collector positioned one stage above the lowermost stage to be 85% or more, a larger amount of the collected raw material including calcium oxide can be supplied to the cyclone collector K1 positioned at the lowermost stage in the K-type air duct. Therefore, carbon dioxide in the kiln combustion exhaust gas can be more efficiently used for the carbonation of calcium oxide.

(Powder Material in Cyclone Collector K1: Behavior of Powder Material)

Due to the adjustment of the cyclone collectors C1 and C2, the powder material including calcium oxide that is supplied to the cyclone collector K1 as the cyclone collector positioned at the lowermost stage in the air duct, is separated into the collected raw material and the scattered raw material. The collected raw material passes through the raw material feed conduit K1b and is supplied to the calcination furnace.

On the other hand, the scattered raw material from the cyclone collector K1 positioned at the lowermost stage in the air duct passes through the gas flow path K1a together with the kiln combustion exhaust gas, is joined with the collected raw material of the cyclone collector C3 in the raw material feed conduit C3b, and is supplied to the cyclone collector K2 positioned one stage above the lowermost stage in the K-type air duct.

In the production method according to the present embodiment, it is preferable that the collection efficiency of the cyclone collector K1 is adjusted to be reduced. Due to the adjustment, a large amount of the powder material including calcium oxide can be supplied as the scattered raw material to the cyclone collector K2 positioned one stage above the stage. Therefore, the carbonation reaction can be promoted, and the amount of carbon dioxide in the calcination furnace combustion exhaust gas of the C-type air duct can be adjusted to be increased.

The collection efficiency of the cyclone collector (preferably the cyclone collector K1) positioned at the lowermost stage is preferably 50% or more and more preferably 55% or more, and the upper limit thereof is preferably 80% or less, more preferably 70% or less, and still more preferably 65% or less. By adjusting the collection efficiency of the cyclone collector K1 that is the cyclone collector positioned at the lowermost stage to be 50% or more, the collected raw material can be efficiently supplied to the calcination furnace, and the decarbonation of the powder material in the calcination furnace can be promoted. On the other hand, by adjusting the collection efficiency to be 80% or less, the scattered raw material including calcium oxide can be increased, a larger amount of the powder material including calcium oxide can be supplied to the cyclone collector K2 that is the cyclone collector positioned one stage above the lowermost stage, and carbon dioxide in the kiln combustion exhaust gas can be efficiently used for carbonation.

(Powder Material in Cyclone Collector K2: Behavior of Powder Material)

Due to the adjustment of the cyclone collectors (cyclone collectors C1 and K1) positioned at the lowermost stage in the air ducts and the cyclone collector C2 positioned one stage above the lowermost stage, a larger amount of the powder material including calcium oxide is supplied to another cyclone collector K2 positioned one stage above the lowermost stage as described above. By supplying a larger amount of the powder material including calcium oxide to the cyclone collector K2 positioned one stage above the lowermost stage in the K-type air duct, carbonation of calcium oxide in the powder material progresses due to carbon dioxide in the kiln combustion exhaust gas, and calcium carbonate is produced. As a result, the amount of carbon dioxide in the kiln combustion exhaust gas can be reduced, and as the amount of calcium oxide in the powder material increases, the amount of carbon dioxide can be reduced.

A temperature of the kiln combustion exhaust gas passing through the cyclone collector K2 positioned one stage above the lowermost stage in the air duct (that is, corresponding to a heating temperature of the powder material in the cyclone collector K2) is preferably 550°C or higher, more preferably 600°C or higher, and still more preferably 650°C or higher, and the upper limit thereof is preferably 700°C or lower. When the temperature of the kiln combustion exhaust gas passing through the cyclone collector K2 is 550°C or higher, the pre-heating of the powder material can be promoted. When the temperature of the kiln combustion exhaust gas is 700°C or lower, the carbonation of calcium oxide can be promoted, and thus the amount of carbon dioxide in the kiln combustion exhaust gas can be reduced.

In order to reduce the temperature of the kiln combustion exhaust gas passing through the cyclone collector K2 positioned one stage above the lowermost stage in the air duct, water or a water-containing waste may be supplied preferably to the combustion exhaust gas passing through at least one of the gas flow paths K0a and K1a on the rotary kiln side further than the cyclone collector K2 and more preferably to the combustion exhaust gas passing through the gas flow path K0a. In particular, it is preferable that the water-containing waste is supplied to the combustion exhaust gas passing through the gas flow path K0a. Here, when the water-containing waste is supplied to the gas flow path K0a, the temperature of the kiln combustion exhaust gas passing through the cyclone collector K2 can be adjusted, and the water-containing waste can be introduced into the rotary kiln. Therefore, clogging in the cyclone collector can be prevented.

Representative examples of the water-containing waste include an organic sludge such as sewage sludge and various discharged water such as waste acid or waste alkali.

In addition, in order to increase the temperature of the kiln combustion exhaust gas passing through the cyclone collector K2 positioned one stage above the lowermost stage in the air duct, a combustible waste may be supplied preferably to the combustion exhaust gas passing through at least one of the gas flow paths K0a and K1a on the rotary kiln side further than the cyclone collector K2 and more preferably to the combustion exhaust gas passing through the gas flow path K0a.

Representative examples of the combustible waste include: an oil-containing sludge such as waste white clay; and waste oil, waste plastic, and the like.

The powder material including calcium oxide that is supplied to the cyclone collector K2 as the cyclone collector positioned one stage above the lowermost stage in the air duct, is converted into the powder material including calcium carbonate due to the carbonation reaction of calcium oxide, and is separated into the collected raw material and the scattered raw material. The collected raw material passes through the raw material feed conduit K2b, and is supplied to the cyclone collector C2 positioned one stage above the lowermost stage in the C-type air duct together with the calcination furnace combustion exhaust gas passing through the gas flow path C1a.

On the other hand, the scattered raw material to the gas flow path K2a from the cyclone collector K2 that is the cyclone collector positioned one stage above the lowermost stage in the air duct passes through the raw material feed conduit C4b, is joined with the collected raw material of the cyclone collector C4 that is supplied to the gas flow path K2a, and is supplied to the cyclone collector K3 positioned two stages above the lowermost stage in the K-type air duct.

In the production method according to the present embodiment, it is preferable that the collection efficiency of the cyclone collector K2 is adjusted to be increased. Due to the adjustment, the powder material including calcium carbonate can pass through the cyclone collector C2 positioned one stage above the lowermost stage in the air duct as the collected raw material, and can be supplied to the calcination furnace. Therefore, the amount of carbon dioxide in the calcination furnace combustion exhaust gas can be adjusted to be increased.

The collection efficiency of the cyclone collector (preferably the cyclone collector K2) positioned one stage above the lowermost stage is preferably 85% or more and more preferably 90% or more. By adjusting the collection efficiency of the cyclone collector K2 positioned one stage above the lowermost stage to be 85% or more, the powder material can pass through the cyclone collector C2 positioned one stage above the lowermost stage in the C-type air duct, and can be supplied to the calcination furnace. Therefore, the amount of carbon dioxide in the calcination furnace combustion exhaust gas can be adjusted to be increased.

Since the collection efficiency in the cyclone collector C2 is set to be high as described above, most of the powder material supplied to the cyclone collector C2 is supplied as the collected raw material to the cyclone collector K1, and the collected raw material in the cyclone collector K1 is supplied to the calcination furnace. In addition, the scattered raw material in the cyclone collector K1 is supplied to the calcination furnace while circulating through the gas flow path K1a, the raw material feed conduit C3b, the cyclone collector K2, the raw material feed conduit K2b, the gas flow path C1a, the cyclone collector C2, the raw material feed conduit C2b, the gas flow path K0a, and the cyclone collector K1.

In addition, the powder material that is supplied to the calcination furnace includes a large amount of calcium carbonate obtained by carbonation of calcium oxide, and is decarbonated together with calcium carbonate in the powder material that is newly supplied to the suspension pre-heater. As a result, calcium oxide and carbon dioxide are produced. As a result, carbon dioxide in the kiln combustion exhaust gas is adsorbed by the carbonation of calcium oxide and emitted into the calcination furnace combustion exhaust gas in the calcination furnace. This way, while reducing the amount of carbon dioxide in the kiln combustion exhaust gas, the amount of carbon dioxide in the calcination furnace combustion exhaust gas can be increased, that is, carbon dioxide in the kiln combustion exhaust gas can be moved to the calcination furnace combustion exhaust gas.

(Adjustment of Amount of Carbon Dioxide in Combustion Exhaust Gas Using Adjustment of Collection Efficiency)

In the production method according to the present embodiment, in the suspension pre-heater, at least one of cyclone collectors positioned at a lowermost stage in the two air ducts and at least one of cyclone collectors positioned one

stage above the lowermost stage include adjustment means for adjusting a collection efficiency of the powder material, and a collection efficiency in the cyclone collectors is adjusted by the adjustment means. As a result, as described above, the amount of carbon dioxide in the combustion exhaust gas can be adjusted. In addition, depending on a method for adjusting the collection efficiency, for example, the amount of carbon dioxide in the calcination furnace combustion exhaust gas can also be increased.

Hereinafter, regarding the aspect of the method for adjusting the amount of carbon dioxide in the combustion exhaust gas using the adjustment of the collection efficiency, the adjustment of the amount of carbon dioxide in the combustion exhaust gas using an increase or decrease in the collection efficiency in the cyclone collectors C1 and K1 positioned at the lowermost stage and the cyclone collectors C2 and K2 positioned one stage above the lowermost stage will be described in more detail.

In the production method according to the present embodiment, by adjusting the collection efficiency of the cyclone collector C1 that is the cyclone collector positioned at the lowermost stage in the air duct to be reduced, the scattered raw material in the cyclone collector C1 can be increased. Therefore, a larger amount of the powder material including calcium oxide can be supplied to the cyclone collector K2 through the cyclone collector C2 and the cyclone collector K1 positioned one stage above the lowermost stage, and the amount of carbon dioxide adsorbed by carbonation as calcium oxide in the kiln combustion exhaust gas can be increased.

Conversely, by adjusting the collection efficiency of the cyclone collector C1 to be increased, the collected raw material in the cyclone collector C1 can be increased. As a result, the amount of the powder material including calcium oxide supplied to the cyclone collector K2 can be reduced. Therefore, the amount of carbon dioxide adsorbed as calcium carbonate in the kiln combustion exhaust gas passing through the cyclone collector K2 can be reduced.

During the adjustment of the amount of carbon dioxide in the combustion exhaust gas, the collection efficiency in the cyclone collector may be adjusted to any numerical value depending on the target amount of carbon dioxide adsorbed. In addition, the same applies to the adjustment of the collection efficiency described below.

When the collection efficiency of the cyclone collector C2 is adjusted to be increased, the collected raw material in the cyclone collector C2 can be increased. As a result, a larger amount of the powder material including calcium oxide can be supplied as the collected raw material to the cyclone collector K2 through the cyclone collector K1, and the amount of carbon dioxide adsorbed by carbonation as calcium oxide in the kiln combustion exhaust gas can be increased.

Conversely, when the collection efficiency of the cyclone collector C2 is adjusted to be reduced, the collected raw material in the cyclone collector C2 can be reduced. As a result, a large amount of the collected raw material that is the powder material including calcium oxide is reduced. Therefore, the amount of carbon dioxide adsorbed as calcium oxide in the kiln combustion exhaust gas passing through the cyclone collector K2 can be reduced.

When the collection efficiency of the cyclone collector K1 is adjusted to be reduced, the scattered raw material in the cyclone collector K1 can be increased. As a result, a larger amount of the powder material including calcium oxide can be supplied as the scattered raw material to the cyclone collector K2, and the amount of carbon dioxide adsorbed by carbonation as calcium oxide in the kiln combustion exhaust gas can be increased.

Conversely, when the collection efficiency of the cyclone collector K1 is adjusted to be increased, the scattered raw material in the cyclone collector K1 can be reduced. As a result, a large amount of the collected raw material that is the powder material including calcium oxide is reduced. Therefore, the amount of carbon dioxide adsorbed as calcium oxide in the kiln combustion exhaust gas passing through the cyclone collector K2 can be reduced.

When the collection efficiency of the cyclone collector K2 is adjusted to be increased, the collected raw material in the cyclone collector K2 can be increased. As a result, the powder material including calcium carbonate that is obtained by carbonation of calcium oxide can be supplied as the collected raw material to the calcination furnace through the cyclone collectors C2 and K1. In the calcination furnace, calcium carbonate is converted into calcium oxide and carbon dioxide by decarbonation, and the amount of carbon dioxide emitted into the calcination furnace combustion exhaust gas can be increased.

Conversely, when the collection efficiency of the cyclone collector K2 is adjusted to be reduced, the collected raw material in the cyclone collector K2 can be reduced. As a result, the collected raw material that is the powder material including calcium carbonate is reduced, and thus the amount of carbon dioxide emitted into the calcination furnace combustion exhaust gas can be reduced.

In the production method according to the present embodiment, regarding at least one of cyclone collectors positioned at the lowermost stage and at least one of cyclone collectors positioned one stage above the lowermost stage that include the adjustment means for adjusting the collection efficiency of the powder material, the collection efficiency is adjusted using the adjustment means. Due to the adjustment, the amounts of the collected raw material and the scattered raw material in the cyclone collector can be adjusted, and the amount of carbon dioxide in the combustion exhaust gas exhausted from the suspension pre-heater, that is, in the kiln combustion exhaust gas and the calcination furnace combustion exhaust gas can be adjusted. It is preferable that carbon dioxide in the kiln combustion exhaust gas is moved to the calcination furnace combustion exhaust gas such that the amount of carbon dioxide in the calcination furnace combustion exhaust gas can be increased.

(Regarding Effect of Production Amount of Cement Clinker)

By adjusting the collection efficiency of the cyclone collector to adjust the amounts of the collected raw material and the scattered raw material, the amount of the powder material that circulates through the suspension pre-heater changes. The powder material that is supplied from the powder material supply device is supplied to the calcination furnace while alternately passing through and/or circulating through the two air ducts in the suspension pre-heater, and is introduced into the rotary kiln. Therefore, the amount of carbon dioxide in the combustion exhaust gas can be adjusted without a change in the production amount of a cement clinker.

This way, by adjusting the collection efficiency of at least one of cyclone collectors positioned at the lowermost stage and at least one of cyclone collectors positioned one stage above the lowermost stage in the two air ducts of the suspension pre-heater, the amount of carbon dioxide in the combustion exhaust gas exhausted from the suspension pre-heater can be adjusted without a change in the production amount of a cement clinker.

Specific examples of the adjustment means for adjusting the collection efficiency in the cyclone collector include a method for adjusting a flow velocity in the gas flow path of the exhaust gas supplied to the cyclone collector. Examples of the method for adjusting the flow velocity of the exhaust gas include a method for adjusting a cross-sectional area of the gas flow path. As the cross-sectional area increases, the gas flow velocity can be reduced. As the cross-sectional area decreases, the gas flow velocity can be increased.

The flow velocity of the exhaust gas and the collection efficiency have a proportional relation in one given range, and as the flow velocity of the exhaust gas increases, the collection efficiency increases. Examples of the adjustment means for adjusting the cross-sectional area of the flow velocity of the exhaust gas include adjustment means such as a method for changing the thickness of a lined refractory of the gas flow path or a method for replacing a gas flow path duct. These methods are merely exemplary. As long as the flow velocity of the exhaust gas can be adjusted, the method is not particularly limited, and other methods can also be adopted.

In addition, examples of the adjustment means for adjusting the collection efficiency in the cyclone collector include a method for adjusting an insertion ratio of an inner cylinder of the cyclone collector. In this case, the insertion ratio of the inner cylinder and the collection efficiency in one given range have a proportional relation. As the insertion ratio of the inner cylinder increases, the collection efficiency can be increased, and as the insertion ratio of the inner cylinder decreases, the collection efficiency can be reduced. The above-described kinds of adjustment means may be adopted alone or as a combination of plural types.

(Carbon Dioxide Recovery Facility)

In the production method according to the present embodiment, when carbon dioxide is recovered from the exhaust gas having passed through the cyclone collector, it is preferable to use a carbon dioxide recovery facility, and it is more preferable to recover carbon dioxide from the calcination furnace combustion exhaust gas using the carbon dioxide recovery facility.

The calcination furnace combustion exhaust gas includes not only a large amount of energy-derived carbon dioxide generated by combustion of fuel but also a large amount of non-energy-derived carbon dioxide generated by decarbonation of calcium carbonate in the powder material. In this case, the calcination furnace combustion exhaust gas includes a large amount of carbon dioxide as compared to the amount of carbon dioxide in the kiln combustion exhaust gas. Therefore, the concentration of carbon dioxide increases. Therefore, it is easier to separate and recover carbon dioxide from the calcination furnace combustion exhaust gas as compared to the kiln combustion exhaust gas. In addition, by adjusting the collection efficiency using the adjustment means in the cyclone collector as described above, the amount of carbon dioxide in the calcination furnace combustion exhaust gas can be increased such that it is easier to separate and recover carbon dioxide.

This way, by recovering carbon dioxide using the carbon dioxide recovery facility from the calcination furnace combustion exhaust gas exhausted from the suspension pre-heater, a larger amount of carbon dioxide can be more efficiently recovered.

The form of the carbon dioxide recovery facility is not particularly limited, and as long as carbon dioxide can be recovered from the exhaust gas, the carbon dioxide recovery facility can be appropriately selected from, for example, a liquid absorption type, a membrane separation type, a solid adsorption type, and a compression and liquefaction recovery type.

(Drying of Cement Raw Material)

As described above, the amount of carbon dioxide in the kiln combustion exhaust gas can be reduced, and the kiln combustion exhaust gas exhausted from the suspension pre-heater can be used for drying the cement raw material. As a result, thermal energy in the combustion exhaust gas can be more efficiently recovered, and thus the heat efficiency in

the production method according to the present embodiment can be improved.

As the exhaust gas used for drying the cement raw material, in addition to the kiln combustion exhaust gas, clinker cooler exhaust gas exhausted from the clinker cooler can also be used. This way, in the production method according to the present embodiment, the heat efficiency can also be improved while suppressing the emissions of carbon dioxide to the atmosphere.

Examples of the drying and grinding device configured to dry and grind a cement raw material to obtain a powder material include a drying and grinding device where a drying device such as a rotary dryer and a grinding device such as a tube mill are combined and a drying grinding device that can simultaneously perform drying and grinding. When the drying and grinding device where the drying device and the grinding device are combined is adopted, the exhaust gas used for drying the cement raw material only needs to be supplied to the drying device. In addition, when the drying grinding device is adopted, the exhaust gas only needs to be supplied to the drying grinding device.

(Regarding Other Devices)

Hereinabove, regarding the production method according to the present embodiment, the configuration of the suspension pre-heater and the method for adjusting the same have been described.

The cement firing facility that is adopted in the production method according to the present embodiment includes not only the suspension pre-heater but also the drying and grinding device and the rotary kiln. As the drying and grinding device and the rotary kiln, devices that are used in the related field can be used.

[Cement Firing Facility]

A cement firing facility according to the present embodiment includes:

a drying and grinding device configured to dry and grind a cement raw material to obtain a powder material,
a suspension pre-heater configured to pre-heat and calcinate the powder material;
a rotary kiln configured to fire the pre-heated and calcinated powder material to obtain a cement clinker; and
a cement clinker cooler configured to cool the cement clinker, in which
the suspension pre-heater includes
a calcination furnace configured to calcinate the powder material,
two different air ducts of a C-type air duct and a K-type air duct,
the C-type air duct including three or more stages of cyclone collectors configured to collect the powder material and a gas flow path configured to sequentially connect the three or more stages of cyclone collectors and through which calcination furnace combustion exhaust gas exhausted from the calcination furnace passes,
the K-type air duct including three or more stages of cyclone collectors configured to collect the powder material and a gas flow path configured to sequentially connect the three or more stages of cyclone collectors and through which kiln combustion exhaust gas exhausted from the rotary kiln passes,
a raw material feed conduit K-I configured to connect a cyclone collector of the K-type air duct to a gas flow path that supplies the calcination furnace combustion exhaust gas to a cyclone collector of the C-type air duct positioned at the same stage as the cyclone collector of the K-type air duct,
a raw material feed conduit C-I configured to connect a cyclone collector of the C-type air duct to a gas flow path that supplies the kiln combustion exhaust gas to a cyclone collector of the K-type air duct positioned one stage below the cyclone collector of the C-type air duct,
a raw material feed conduit K-II configured to connect a cyclone collector positioned at a lowermost stage of the K-type air duct to the calcination furnace,
a raw material feed conduit C-II configured to connect a cyclone collector positioned at a lowermost stage of the C-type air duct to the rotary kiln, and
a powder material supply device configured to supply the powder material to a cyclone collector positioned at an uppermost stage in at least one of the two air ducts, and
at least one of cyclone collectors positioned at a lowermost stage in the two air ducts and at least one of cyclone collectors positioned one stage above the lowermost stage include adjustment means for adjusting a collection efficiency of the powder material.

In the cement firing facility according to the present embodiment, the drying and grinding device, the suspension pre-heater, and the rotary kiln are as described above in the method for producing a cement clinker. In addition, regarding the suspension pre-heater, the two air ducts including the cyclone collectors and the gas flow path, the raw material feed conduit, and the adjustment means in the cyclone collectors are as described above in the method for producing a cement clinker.

Accordingly, the method for producing a cement clinker according to the present embodiment can be easily performed using the cement firing facility according to the present embodiment.

Examples

Hereinafter, the present invention will be described in detail using Examples, but is not limited to the following Examples.

(Comparative Example 1)

The cement firing facility having the configuration of the flowchart illustrated in FIG. 1 was used. The collection efficiencies in the cyclone collectors C1, K1, C2, and K2 were set to 90%, 90%, 80%, and 80%, respectively, that were set during the operation of the facility.

(Example 1)

The cement firing facility was operated using the same method as that of Comparative Example 1, except that the collection efficiencies in the cyclone collectors C1, K1, C2, and K2 were changed to the efficiencies shown in Table 1. Here, the adjustment of the collection efficiency was performed by increasing or decreasing the thickness of a lined refractory of a gas flow path duct to adjust a flow velocity of the exhaust gas in the gas flow path such that the cross-sectional area of the gas flow path was adjusted and adjusting an insertion ratio of an inner cylinder of the cyclone collector in combination.

(Comparative Example 2)

The cement firing facility was operated using the same method as that of Comparative Example 1, except that the exhaust gas (calcination furnace combustion exhaust gas) from the C-type air duct was supplied to the carbon dioxide recovery facility.

(Example 2)

The cement firing facility was operated using the same method as that of Comparative Example 1, except that, in Comparative Example 2 the collection efficiencies in the cyclone collectors C1, K1, C2, and K2 were changed to the efficiencies shown in Table 1. Here, the adjustment of the collection efficiency was performed by performing the adjustment of the flow velocity of the exhaust gas in the gas flow path and the adjustment of the insertion ratio of the inner cylinder of the cyclone collector in combination.

Regarding Examples 1 and 2 and Comparative Examples 1 and 2, a ratio of the amount of carbon dioxide in each of the exhaust gases to the total amount of carbon dioxide in the exhaust gas (calcination furnace combustion exhaust gas) exhausted from the C-type air duct and the exhaust gas (kiln combustion exhaust gas) exhausted from the K-type air duct is shown in Table 1.

[Table 1]

| | | | Comparative Example 1 | Example 1 | Comparative Example 2 | Example 2 |
|---|---|---|---|---|---|---|
| Collection Efficiency Adjustment | | | Not Adjusted | Adjusted | Not Adjusted | Adjusted |
| Carbon Dioxide Recovery Facility | | | Not Provided | Not Provided | Provided | Provided |
| Collection Efficiency | | | | | | |
| Cyclone Collector C1 | | % | 90 | 60 | 90 | 60 |
| Cyclone Collector K1 | | % | 90 | 60 | 90 | 60 |
| Cyclone Collector C2 | | % | 80 | 90 | 80 | 90 |
| Cyclone Collector K2 | | % | 80 | 90 | 80 | 90 |
| Carbon Dioxide Emission Rate | | | | | | |
| C-Type Air Duct | Emission | % | 68 | 81 | 0 | 0 |

(continued)

| Carbon Dioxide Emission Rate | | | | | | |
|---|---|---|---|---|---|---|
| | Recovery | % | 0 | 0 | 68 | 81 |
| K-Type Air Duct | | % | 32 | 19 | 32 | 19 |
| Total | | % | 100 | 100 | 100 | 100 |
| Carbon Dioxide Recovery Rate | | % | 0 | 0 | 68 | 81 |

In Comparative Example 1, the ratio of carbon dioxide emitted from the C-type air duct was 68%, and the ratio of carbon dioxide emitted from the K-type air duct was 32%. On the other hand, in Example 1 where the collection efficiencies of the cyclone collectors C1 and K1 positioned at the lowermost stage were reduced to 60% and the collection efficiencies of the cyclone collectors C2 and K2 positioned one stage above the lowermost stage were increased to 90%, the ratio of carbon dioxide emitted from the C-type air duct was 81%, and the ratio of carbon dioxide emitted from the K-type air duct was 19%. This way, it was verified that the amounts of carbon dioxide emitted from the two air ducts can be adjusted using the very simple method for adjusting the collection efficiencies of the specific cyclone collectors such as the cyclone collector positioned at the lowermost stage and the cyclone collector positioned one stage above the lowermost stage and that carbon dioxide in the exhaust gas (kiln combustion exhaust gas) passing through the K-type air duct can be moved to the exhaust gas (calcination furnace combustion exhaust gas) passing through the C-type air duct in Example 1.

Comparative Example 2 is an example in which the exhaust gas (calcination furnace combustion exhaust gas) exhausted from the C-type air duct in Comparative Example 1 was supplied to the carbon dioxide recovery facility. As a result, it can be seen that 68% of carbon dioxide can be recovered. In Example 2, the collection efficiencies were adjusted such that the collection efficiencies of the cyclone collectors C1 and K1 positioned at the lowermost stage in Comparative Example 2 were reduced to 60% and the collection efficiencies of the cyclone collectors C2 and K2 positioned one stage above the lowermost stage were increased to 90%. According to Example 2, the ratio of carbon dioxide emitted from the C-type air duct was 81%, and this exhaust gas was supplied to the carbon dioxide recovery facility. As a result, it was verified that 81% of carbon dioxide can be recovered. In addition, the ratio of carbon dioxide exhausted from the K-type air duct was 19%, and it was verified that the emissions of carbon dioxide to the atmosphere can be suppressed while improving the recovery amount of carbon dioxide.

The production amount of a cement clinker in Comparative Examples 1 and 2 and the production amount of a cement clinker in Examples 1 and 2 where the collection efficiencies of the cyclone collectors were adjusted were substantially the same, and it was verified that, with the production method and the firing facility according to the present embodiment, the recovery amount of carbon dioxide can be adjusted while maintaining the production amount of a cement clinker, and further the emissions of carbon dioxide to the atmosphere can be suppressed while improving the recovery amount of carbon dioxide.

In addition, in Examples 1 and 2, although carbon dioxide in the exhaust gas (kiln combustion exhaust gas) exhausted from the K-type air duct was moved to the exhaust gas passing through the C-type air duct, the total flow rate in the exhaust gas was maintained to be substantially the same as the total flow rate in the exhaust gas in Comparative Examples 1 and 2. Therefore, it was verified that, by supplying the exhaust gas (kiln combustion exhaust gas) exhausted from the K-type air duct as a drying heat source for the cement raw material to the drying and grinding device and adjusting the operating time, a necessary amount of the cement raw material can be dried.

It was verified from the above results that, with the method for producing a cement clinker and the cement firing facility according to the present embodiment, the amount of carbon dioxide in two combustion exhaust gases produced in the cement firing facility is adjusted without modifying the cement firing facility on a large scale. Further, it was verified that, by increasing the amount of carbon dioxide in the calcination furnace combustion exhaust gas, the recovery amount of carbon dioxide can be improved and the emissions of carbon dioxide to the atmosphere can be suppressed.

## Claims

**1.** A method for producing a cement clinker using a cement firing facility including

a drying and grinding device configured to dry and grind a cement raw material to obtain a powder material,
a suspension pre-heater configured to pre-heat and calcinate the powder material,
a rotary kiln configured to fire the pre-heated and calcinated powder material to obtain a cement clinker, and
a cement clinker cooler configured to cool the cement clinker, wherein
the suspension pre-heater includes

a calcination furnace configured to calcinate the powder material,
two different air ducts of a C-type air duct and a K-type air duct,
the C-type air duct including three or more stages of cyclone collectors configured to collect the powder material and a gas flow path configured to sequentially connect the three or more stages of cyclone collectors and through which calcination furnace combustion exhaust gas exhausted from the calcination furnace passes,
the K-type air duct including three or more stages of cyclone collectors configured to collect the powder material and a gas flow path configured to sequentially connect the three or more stages of cyclone collectors and through which kiln combustion exhaust gas exhausted from the rotary kiln passes,
a raw material feed conduit K-I configured to connect a cyclone collector of the K-type air duct to a gas flow path that supplies the calcination furnace combustion exhaust gas to a cyclone collector of the C-type air duct positioned at the same stage as the cyclone collector of the K-type air duct,
a raw material feed conduit C-I configured to connect a cyclone collector of the C-type air duct to a gas flow path that supplies the kiln combustion exhaust gas to a cyclone collector of the K-type air duct positioned one stage below the cyclone collector of the C-type air duct,
a raw material feed conduit K-II configured to connect a cyclone collector positioned at a lowermost stage of the K-type air duct to the calcination furnace,
a raw material feed conduit C-II configured to connect a cyclone collector positioned at a lowermost stage of the C-type air duct to the rotary kiln, and
a powder material supply device configured to supply the powder material to a cyclone collector positioned at an uppermost stage in at least one of the two air ducts,
at least one of cyclone collectors positioned at a lowermost stage in the two air ducts and at least one of cyclone collectors positioned one stage above the lowermost stage include adjustment means for adjusting a collection efficiency of the powder material, and
a collection efficiency in the cyclone collectors is adjusted by the adjustment means.

**2.** The method for producing a cement clinker according to Claim 1, wherein in the cyclone collectors positioned at the lowermost stage, the collection efficiency is reduced by the adjustment means.

**3.** The method for producing a cement clinker according to Claim 1, wherein in the cyclone collectors positioned one stage above the lowermost stage, the collection efficiency is increased by the adjustment means.

**4.** The method for producing a cement clinker according to Claim 1, wherein a temperature of the kiln combustion exhaust gas after passing through a cyclone collector positioned one stage above the lowermost stage in the K-type air duct is 700°C or lower.

**5.** The method for producing a cement clinker according to Claim 1, wherein carbon dioxide is recovered from the calcination furnace combustion exhaust gas using a carbon dioxide recovery facility.

**6.** The method for producing a cement clinker according to Claim 1, wherein at least the kiln combustion exhaust gas is used for drying the cement raw material.

**7.** The method for producing a cement clinker according to Claim **1,** wherein

the drying and grinding device includes a drying unit or a drying and grinding unit, and
at least the kiln combustion exhaust gas is supplied to the drying unit or the drying and grinding unit.

**8.** A cement firing facility comprising:

a drying and grinding device configured to dry and grind a cement raw material to obtain a powder material;
a suspension pre-heater configured to pre-heat and calcinate the powder material;
a rotary kiln configured to fire the pre-heated and calcinated powder material to obtain a cement clinker; and
a cement clinker cooler configured to cool the cement clinker, wherein
the suspension pre-heater includes
a calcination furnace configured to calcinate the powder material,
two different air ducts of a C-type air duct and a K-type air duct,
the C-type air duct including three or more stages of cyclone collectors configured to collect the powder material and a gas flow path configured to sequentially connect the three or more stages of cyclone collectors and through which calcination furnace combustion exhaust gas exhausted from the calcination furnace passes,

the K-type air duct including three or more stages of cyclone collectors configured to collect the powder material and a gas flow path configured to sequentially connect the three or more stages of cyclone collectors and through which kiln combustion exhaust gas exhausted from the rotary kiln passes,
a raw material feed conduit K-I configured to connect a cyclone collector of the K-type air duct to a gas flow path that supplies the calcination furnace combustion exhaust gas to a cyclone collector of the C-type air duct positioned at the same stage as the cyclone collector of the K-type air duct,
a raw material feed conduit C-I configured to connect a cyclone collector of the C-type air duct to a gas flow path that supplies the kiln combustion exhaust gas to a cyclone collector of the K-type air duct positioned one stage below the cyclone collector of the C-type air duct,
a raw material feed conduit K-II configured to connect a cyclone collector positioned at a lowermost stage of the K-type air duct to the calcination furnace,
a raw material feed conduit C-II configured to connect a cyclone collector positioned at a lowermost stage of the C-type air duct to the rotary kiln, and
a powder material supply device configured to supply the powder material to a cyclone collector positioned at an uppermost stage in at least one of the two air ducts, and
at least one of cyclone collectors positioned at a lowermost stage in the two air ducts and at least one of cyclone collectors positioned one stage above the lowermost stage include adjustment means for adjusting a collection efficiency of the powder material.

**9.** The cement firing facility according to Claim 8, further comprising a carbon dioxide recovery facility configured to recover carbon dioxide from the calcination furnace combustion exhaust gas.

**10.** The cement firing facility according to Claim 8, wherein

the drying and grinding device includes a drying unit or a drying and grinding unit, and
the cement firing facility further comprises an exhaust gas supply pipe configured to supply at least the kiln combustion exhaust gas to the drying unit or the drying and grinding unit.

FIG. 1

K-TYPE POWDER MATERIAL SUPPLY (FROM K-TYPE POWDER MATERIAL SUPPLY DEVICE)
K4a
CARBON DIOXIDE RECOVERY FACILITY, CEMENT RAW MATERIAL DRYING, AND THE LIKE
C4a
CARBON DIOXIDE RECOVERY FACILITY, CEMENT RAW MATERIAL DRYING, AND THE LIKE
K4
K3a
K4b
C4
C-TYPE POWDER MATERIAL SUPPLY (FROM C-TYPE POWDER MATERIAL SUPPLY DEVICE)
K-TYPE AIR DUCT
C4b
K2a
K3
C3a
C-TYPE AIR DUCT
C3
K3b
C3b
C2a
K1a
K2
C2
K2b
C2b
C1a
K1
C0a
C1
CALCINATION FURNACE
FUEL
K0a
K1b
C1b
FUEL
EMISSION TO ATMOSPHERE
ROTARY KILN
CEMENT CLINKER COOLER
AIR
AIR
AIR

**INTERNATIONAL SEARCH REPORT**

International application No.
**PCT/JP2024/036921**

**A. CLASSIFICATION OF SUBJECT MATTER**

***C04B 7/44***(2006.01)i; ***B01D 53/62***(2006.01)i; ***F27D 17/22***(2025.01)i
FI: C04B7/44 101; B01D53/62; F27D17/00 105A

According to International Patent Classification (IPC) or to both national classification and IPC

**B. FIELDS SEARCHED**

Minimum documentation searched (classification system followed by classification symbols)

C04B7/00-C04B28/36; B01D53/62; F27D17/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 56-37260 A (SUMITOMO HEAVY INDUSTRIES, LTD.) 10 April 1981 (1981-04-10)<br>claims, page 2, upper left column, line 18 to upper right column, line 15, fig. 4 | 8, 10<br>8-10<br>1-7 |
| Y<br>A | JP 10-87355 A (SUMITOMO OSAKA CEMENT CO., LTD.) 07 April 1998 (1998-04-07)<br>claims, paragraphs [0016], [0030] | 8-10<br>1-7 |
| Y<br>A | JP 2020-121900 A (SUMITOMO OSAKA CEMENT CO., LTD.) 13 August 2020 (2020-08-13)<br>paragraphs [0006], [0024] | 8-10<br>1-7 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 November 2024** | **17 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
PCT/JP2024/036921

C. DOCUMENTS CONSIDERED TO BE RELEVANT

| Category* | Citation of document, with indication, where appropriate, of the relevant passages | Relevant to claim No. |
|---|---|---|
| Y | WO 2009/136485 A1 (MITSUBISHI MATERIALS CORPORATION) 12 November 2009 (2009-11-12) paragraphs [0100]-[0103] | 9 |
| A | | 1-8, 10 |
| A | JP 2022-148255 A (TAIHEIYO CEMENT CORPORATION) 06 October 2022 (2022-10-06) | 1-10 |
| A | JP 52-136219 A (ISHIKAWAJIMA-HARIMA HEAVY INDUSTRIES CO., LTD.) 14 November 1977 (1977-11-14) | 1-10 |
| A | JP 55-22322 A (SUMITOMO CEMENT CO., LTD.) 18 February 1980 (1980-02-18) | 1-10 |
| A | JP 62-70249 A (KABUSHIKI KAISHA KOBE SEIKO SHO) 31 March 1987 (1987-03-31) | 1-10 |
| A | JP 2011-105535 A (MITSUBISHI MATERIALS CORPORATION) 02 June 2011 (2011-06-02) | 1-10 |

Form PCT/ISA/210 (second sheet) (July 2022)

**INTERNATIONAL SEARCH REPORT**
**Information on patent family members**

International application No.
**PCT/JP2024/036921**

| Patent document cited in search report | Publication date (day/month/year) | Patent family member(s) | Publication date (day/month/year) |
|---|---|---|---|
| JP 56-37260 A | 10 April 1981 | (Family: none) | |
| JP 10-87355 A | 07 April 1998 | (Family: none) | |
| JP 2020-121900 A | 13 August 2020 | (Family: none) | |
| WO 2009/136485 A1 | 12 November 2009 | US 2011/0044880 A1<br>paragraphs [0134]-[0138]<br>CN 102015568 A | |
| JP 2022-148255 A | 06 October 2022 | US 2023/0365464 A1<br>CN 116583705 A | |
| JP 52-136219 A | 14 November 1977 | US 4130390 A | |
| JP 55-22322 A | 18 February 1980 | US 4276020 A | |
| JP 62-70249 A | 31 March 1987 | (Family: none) | |
| JP 2011-105535 A | 02 June 2011 | US 2012/0141354 A1<br>CN 102574741 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9110485 A
- JP H9110485 B
- JP 55022322 A
- JP S5522322 B
- JP 2022148255 A